# EUROPEAN PATENT SPECIFICATION

(11) **EP 0 386 809 B1**
(45) Date of publication and mention of the grant of the patent: **05.05.1993**
(21) Application number: 90200334.2
(22) Date of filing: 14.02.1990
(51) Int. Cl.: B65G 13/06, B65G 23/08

(54) **Conveyor**
Förderer
Transporteur

(30) Priority: 15.02.1989 NL 8900361
(43) Date of publication of application: 12.09.1990
(60) Divisional application: 92200257.1
(73) Proprietor: RAPISTAN VAN DER LANDE B.V., NL-5460 AA Veghel (NL)
(72) Inventor: Van den Goor, Jakobus, 5674 SH Nuenen (NL)
(74) Representative: Van kan, Johan Joseph Hubert, Ir.

(56) References cited:
- DE-A- 2 649 648
- US-A- 2 540 099

## Description

The invention relates to a conveyor provided with a frame part and at least one tubular roll supported by said frame part, which tubular roll can be rotated about its central axis, by means of a motor having a casing arranged inside said tubular roll, for exerting a force on an object moving across the conveyor, the motor being supported by and being arranged at least partially inside a sleeve surrounding the casing of the motor, surrounded by the tubular roll and secured to the frame part at one end, whilst a carrying means, whose outer circumference is connected with one end of the tubular roll, is secured to the outgoing shaft.

From DE-A-2,649,648 there is known such construction wherein a tubular roll is fixed to the outgoing shaft of a motor, which motor is surrounded by a sleeve located inside said tubular roll.

At its end remote from the outgoing shaft of the motor the sleeve is secured to a massive extension piece, which is accommodated, with its end remote from the sleeve, in a flange forming part of a frame of a device. The tubular roll is supported near one end only, by means of a bearing arranged between the tubular roll and the extension piece. A disadvantage of this construction is i.a. that during operation the motor will be loaded by transverse forces.

GB-A-668,631 shows a tubular roll, in the interior of which there is mounted an electromotor. The roll is thereby rotatable about a shaft having a fixed arrangement in the frame, to which shaft the windings of the electromotor are secured. Between the tubular roll and the shaft there is provided a sleeve supporting rotor rods, said sleeve near its end being provided with flanges, which are rotatable about the shaft via bearings. Between one end of the sleeve and the tubular roll there is provided a gear. This construction is complicated and it is difficult to assemble and disassemble.

US-A-3,362,686 illustrates a tubular roll in which an electromotor is arranged. The roll can be driven, via a gear provided at one end of the electromotor, by the outgoing shaft of the electromotor.

Stubs, being integral with plate-shaped parts extending perpendicularly to the longitudinal axis of the electromotor, are secured to the opposed ends of the motor by means of said plate-shaped parts. Said stubs serve to support the tubular roll and the motor in a frame. When such a construction is used undesirable bending forces may be transferred to the motor via said stubs.

From US-A-4,013,166 there is known a construction wherein a motor, arranged inside a tubular roll, is provided in a housing having a U-shaped section, to one end of which there is secured a shaft, which is supported in a frame. On said shaft there is also journalled, via a bearing, a flange provided on one end of the tubular roll.

The outgoing shaft of the motor is secured to a hub, which is rotatably supported by a bearing, which is accommodated in a flange provided at one end of the housing. The hub is furthermore connected with a flange provided in the interior of the tubular roll, between the ends of the tubular roll. In the hub there is furthermore journalled the end of a further shaft located in the extension of the outgoing shaft of the motor, said further shaft, besides being supported in the hub, also being supported, by means of a bearing, in a flange provided at one end of the tubular roll. The end of said latter shaft projecting from the tubular roll serves to support the roll. This construction is complicated, whilst in case of an incorrect alignment of the various aligned shafts the occurrence of bending forces acting on the outgoing motor shaft cannot be avoided.

US-A-2,540,099 furthermore shows a construction of a tubular roll with a motor provided therein, whereby the motor is coupled to the tubular roll via a gear which is accommodated in a further housing accommodated inside the tubular roll. Also this construction is heavy and complicated, and it is difficult to assemble and disassemble.

The object of the invention is to obtain a conveyor of the kind mentioned in the preamble, which has a simple, compact construction.

According to the invention this objective can be accomplished in that a bearing is provided between the outer circumference of the end of the sleeve directly secured to the frame part and the inner wall of the tubular roll, and that the other end of the tubular roll connected with the outgoing shaft is supported by a bearing which is provided between the tubular roll and a supporting member which is directly fixed to the frame part.

The construction according to the invention can be efficiently used in particular with a conveyor wherein the frame part supporting the motor is pivotable about an axis perpendicularly cutting or crossing the central axis of the motor, so that the roll will serve as a deviating means for objects moved across the conveyor. Particularly for such deviating means a compact, light construction is important, in order to make an effective arrangement between the various intended positions of such a roll possible. Such a device is known per se from the prior Dutch Patent Application 8,601,621. As is described in said publication a few small rolls, arranged side by side, are usually used with such a construction. It will be apparent that in particular when such a device is used both a considerable simplification of the design of the drive for the rolls and a particularly compact construction can be realised.

The invention will be further explained hereinafter with reference to two possible embodiments of the construction according to the invention illustrated in the accompanying figures.

Figure 1 shows a first possible embodiment of the construction according to the invention, partly in elevational view and partly in section.

Figure 2 shows a section of a second embodiment of a possible construction of the device according to the invention.

Figure 3 shows a section of a third embodiment of a possible construction of the device according to the invention.

Figure 4 shows a side elevational view of Figure 3, according to the arrow IV in Figure 3.

Figure 5 shows a side elevational view of a part of Figure 3, according to the arrow V in Figure 3.

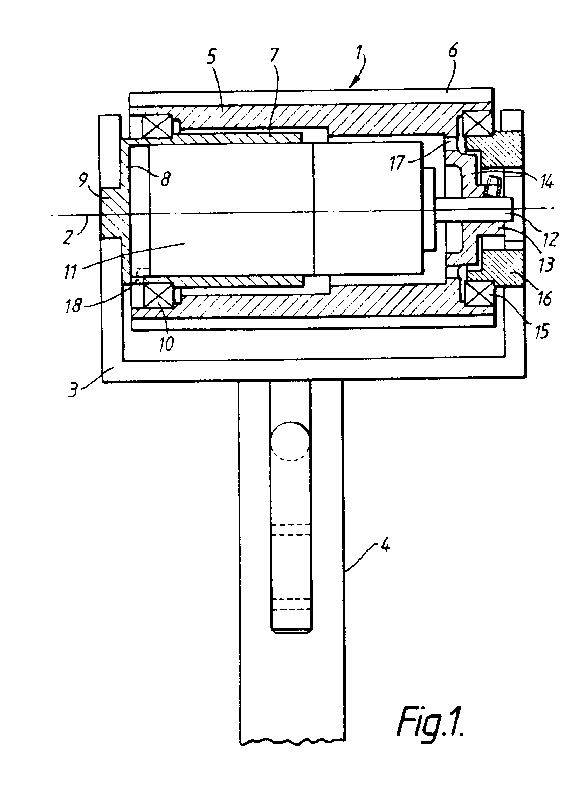

Figure 1 shows a roll 1, which is rotatably journalled, about an axis of rotation 2, in a U-shaped bracket 3, which is secured to the upper end of a shifting shaft 4 which, together with said bracket 3, forms a frame part which will be pivotable relative to the other part of a conveyor (not shown), about the central axis of the shifting shaft 4, all this in a manner such as described in the prior Dutch Patent Application No. 8,601,621, whose contents are considered to be incorporated herein by reference.

In the illustrated embodiment the roll is built up of a metal casing 5, which is surrounded by a shell 6 consisting of a slightly resilient material, e.g. rubber or a plastic material.

In the interior of the hollow roll 1 there is located a carrier 7 formed by a sleeve. The sleeve 7 is provided, at its end located near the one end of the roll 1, with a transverse wall 8 closing the sleeve. The transverse wall 8 is provided with a projecting part 9, which is accommodated in a corresponding recess of the bracket 3, in such a manner that the sleeve 7 is secured in a fixed position with respect to the bracket 3.

The end of the roll 1 located near the end of the sleeve 7 supported by the bracket 3 is rotatably supported by the sleeve of the carrier 7 by means of a bearing 10 provided between the inner circumference of the roll 1 and the outer circumference of the sleeve 7.

One end of an electromotor 11 is fixed in the sleeve 7. As is illustrated in Figure 1 the outgoing shaft 12 of the electromotor 11 is fixed in a hub 13 surrounding the shaft, said hub 13 forming part of a disc 14 located near one end of the casing 5 of the roll, being integral with said casing 5 and extending substantially perpendicularly to the axis of rotation 2 of the roll 1.

The end of the roll 1 located near the outgoing shaft 12 is rotatably supported, by means of a bearing 15 accommodated inside the roll 1, by an annular supporting member 16 secured to the U-shaped bracket 3.

As furthermore appears from the figure a few passages 17 are provided in the disc 14, and in the end of the sleeve 7 joining up with the wall 8 there are provided one or more passages 18.

The current supply wires for the motor 11 may e.g. be passed, in a manner not shown, through a hole provided in the projecting part 9.

When using the above construction the roll is driven by its own electromotor, said electromotor having a very compact construction being accomodated in the interior of the roll. Because of the above construction the transverse forces exerted on the roll 1 during operation are directly transferred to the bracket 3 via the bearings and the sleeve 7 and the supporting member 16 respectively, so that the motor 11 is not loaded by radial and axial forces, a result of which it is possible to use a light version of the motor.

By providing the holes 17 and 18 a flow path has been effected for the passage of cooling air.

In case of a possible failure in the drive of the roll 1 and/or in case of damage to the roll 1 itself the roll with its driving motor can be easily exchanged and/or repaired, without it being necessary to influence the drive and/or the arrangement of other rolls.

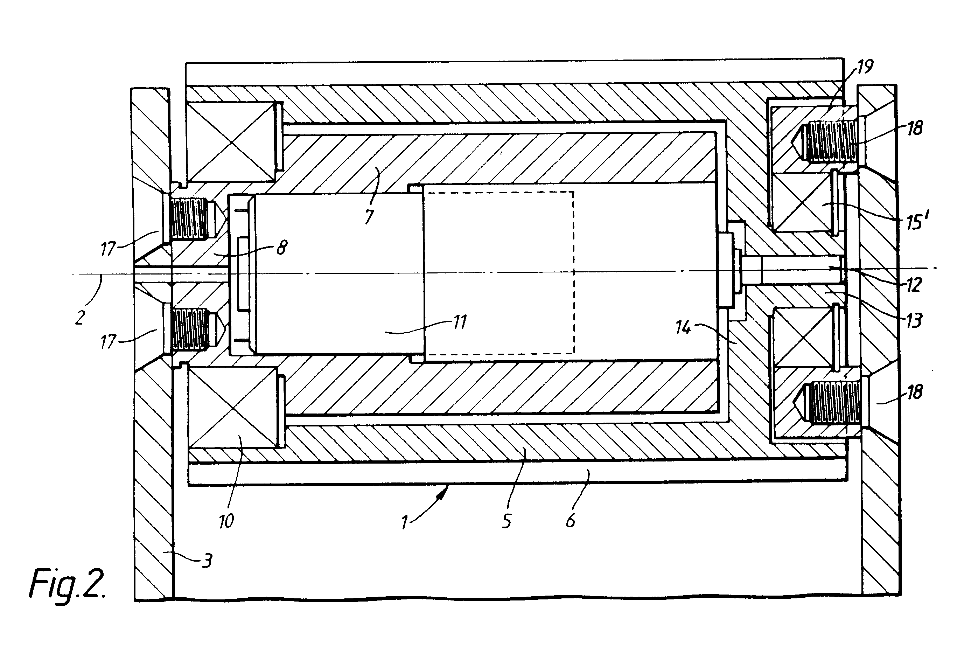

Figure 2 shows an example which broadly corresponds with Figure 1. Those parts that correspond with the embodiment of Figure 1 are indicated by the same reference numbers.

In this embodiment the end wall 8 of the sleeve 7 is not provided with a projection accommodated in the fork, but it is clamped to a leg of the fork 3 by means of a few bolts 17.

Furthermore the hub 13, in which there is fixed the outgoing shaft 12 of the motor, is surrounded by a bearing 15' in this embodiment, said bearing 15' being supported by an annular supporting means 19 secured to the bracket 3 by means of bolts 18.

It will be apparent that also with this embodiment the motor 11 is not subjected to transverse forces.

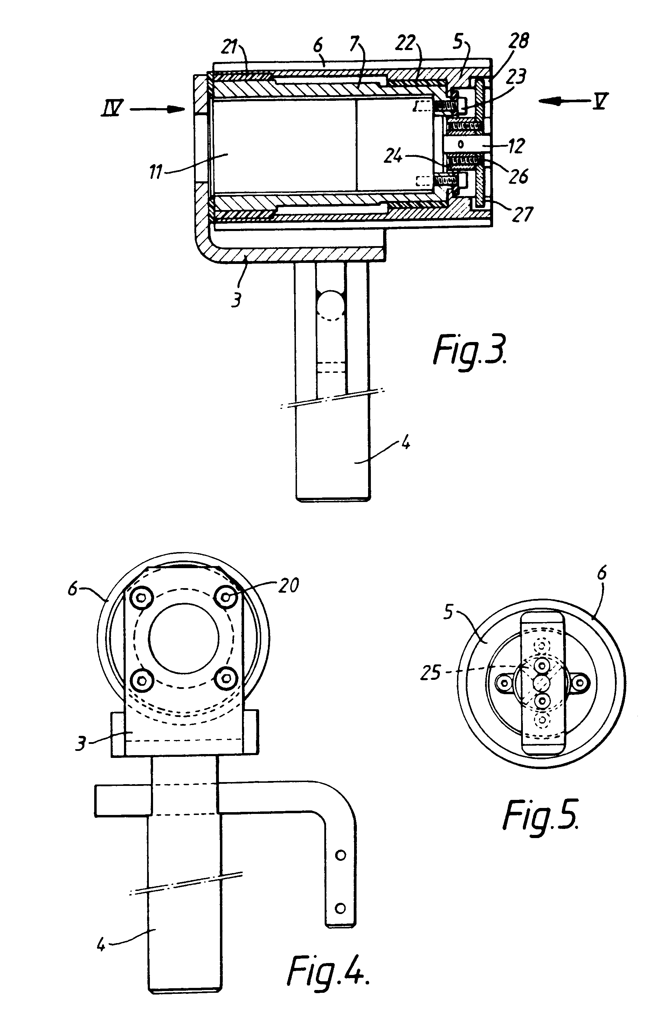

Also with the embodiment illustrated in the Figures 3 - 5 those parts that correspond with the parts of the embodiment illustrated in Figure 1 are indicated by the same reference numbers as the ones used in Figure 1. As will be apparent, in particular from Figure 3, the bracket 3 has only one leg in this embodiment, to which leg there is secured the sleeve 7, by means of four bolts 20. The sleeve 7 not only supports the roll 1, by means of a bearing 21, near its end secured to the bracket 3, but also, by means of a bearing 22, near its other end. The motor 11 is likewise secured to said end of the sleeve 7 remote from the leg of the bracket 3, by means of bolts 23.

To the outgoing shaft 12 of the motor there is secured a sleeve 24 by means of a lock screw 25. To said sleeve 24 there is secured, by means of bolts 26, a plate-shaped means 27, whose ends are located in recesses 28 provided in the end of the casing 5 of the roll, so that the roll can be rotated via the plate-shaped means 27 secured to the outgoing shaft 12 of the motor 11.

By supporting the assembly of roll 1, sleeve 7 and motor 11 at one end only it is avoided that the construction has to be madewith close tolerances, as is necessary when said supporting is effected by means of two legs located on both sides of the above assembly, as is the case in the preceding embodiments.

## Claims

1. Conveyor provided with a frame part (3) and at least one tubular roll (1) supported by said frame part, which tubular roll (1) can be rotated about its central axis, by means of a motor (11) having a casing arranged inside said tubular roll (1), for exerting a force on an object moving across the conveyor, the motor (11) being supported by and being arranged at least partially inside a sleeve (7) surrounding the casing of the motor, surrounded by the tubular roll (1) and secured to the frame part (3) at one end, whilst a carrying means (14, 27), whose outer circumference is connected with one end of the tubular roll (1), is secured to the outgoing shaft (12), characterised in that a bearing (10, 21) is provided between the outer circumference of the end of the sleeve (7) directly secured to the frame part (3) and the inner wall of the tubular roll (6), and that the other end of the tubular roll (1) connected with the outgoing shaft (12) is supported by a bearing (15,15', 22) which is provided between the tubular roll (1) and a supporting member (16, 19, 7) which is directly fixed to the frame part (3).

2. Conveyor according to claim 1, characterised in that the disc-shaped carrying means (14) comprises a hub (13), which is integral with said roll (1).

3. Conveyor according to claim 1, characterised in that the carrying means (27) extending transversely to the shaft (12) is located with its ends in recesses (28) provided in said roll (1).

4. Conveyor according to any one of the preceding claims, characterised in that the outgoing shaft is surrouned by a supporting member (16) secured to the frame part (3) and that a bearing (15) is provided between the outer circumference of said supporting member (16) and the inner circumference of the roll (1).

5. Conveyor according to any one of the claims 1-3, characterised in that the outgoing shaft (12) is surrounded by a supporting member (19) secured to the frame part and that a bearing (15') is provided between the outer circumference of a hub mounted on the outgoing shaft (12) of the motor (11) and being fixed to the roll (1), and the inner circumference of the supporting means (19).

6. Conveyor according to any one of the claims 1-3, characterised in that near both its ends the roll (1) is supported, by means of bearings (21, 22), on the sleeve (7) located inside the roll (1).

## Patentansprüche

1. Förderer mit einem Rahmenteil (3) und mindestens einer rohrförmigen Rolle (1), die vom Rahmenteil gelagert wird und mit Hilfe eines Motors (11), der ein innerhalb der rohrförmigen Rolle (1) angeordnetes Gehäuse besitzt, um ihre Mittelachse gedreht werden kann, um eine Kraft auf einen sich über den Förderer bewegenden Gegenstand auszuüben, wobei der Motor (11) von einer Hülse (7), die das Gehäuse des Motors umgibt, von der rohrförmigen Rolle (1) umgeben wird und an einem Ende am Rahmenteil (3) befestigt ist, gelagert wird und zumindest teilweise in dieser angeordnet ist, während eine Trägereinrichtung (14, 27), deren Außenumfang mit einem Ende der rohrförmigen Rolle (1) verbunden ist, an der Ausgangswelle (12) befestigt ist, dadurch gekennzeichnet, daß ein Lager (10, 21) zwischen dem Außenumfang des Endes der Hülse (7), das direkt am Rahmenteil (3) befestigt ist, und der Innenwand der rohrförmigen Rolle (6) vorgesehen ist und daß das andere Ende der rohrförmigen Rolle (1), das mit der Ausgangswelle (12) verbunden ist, von einem Lager (15, 15', 22) gelagert wird, das zwischen der rohrförmigen Rolle (1) und einem Lagerelement (16, 19, 7) vorgesehen ist, welches direkt am Rahmenteil (3) befestigt ist.

2. Förderer nach Anspruch 1, dadurch gekennzeichnet, daß die scheibenförmige Trägereinrichtung (14) eine Nabe (13) umfaßt, die einstückig mit der Rolle (1) ausgebildet ist.

3. Förderer nach Anspruch 1, dadurch gekennzeichnet, daß die sich quer zur Welle (12) erstreckende Trägereinrichtung (27) mit ihren Enden in Ausnehmungen (28) angeordnet ist, die in der Rolle (1) vorgesehen sind.

4. Förderer nach einem der vorangehenden Ansprüche, dadurch gekennzeichnet, daß die Ausgangswelle von einem Lagerelement (16) umgeben ist, das am Rahmenteil (3) befestigt ist, und daß ein Lager (15) zwischen dem Außenumfang des Lagerelementes (16) und dem Innenumfang der Rolle (1) vorgesehen ist.

5. Förderer nach einem der Ansprüche 1 bis 3, dadurch gekennzeichnet, daß die Ausgangswelle (12) von einem Lagerelement (19) umgeben ist, das am Rahmenteil befestigt ist, und daß ein Lager (15') zwischen dem Außenumfang einer Nabe, die an der Ausgangswelle (12) des Motors (11) montiert und an der Rolle (1) fixiert ist, und dem Innenumfang der Lagereinrichtung (19) vorgesehen ist.

6. Förderer nach einem der Ansprüche 1 bis 3, dadurch gekennzeichnet, daß die Rolle (1) in der Nähe von ihren beiden Enden mit Hilfe von Lagern (21, 22) an der innerhalb der Rolle (1) angeordneten Hülse (7) gelagert ist.

## Revendications

1. Convoyeur comprenant une ossature (3) et au moins un rouleau tubulaire (1) supporté par ladite ossature, ce rouleau tubulaire (1) pouvant être entraîné en rotation autour de son axe central au moyen d'un moteur (11),comportant un carter placé à l'intérieur dudit rouleau tubulaire (1), pour exercer une force sur un objet passant sur le convoyeur, le moteur (11) étant supporté par et au moins partiellement logé à l'intérieur d'un manchon (7) qui entoure le carter du moteur, entouré par le rouleau tubulaire (1) et fixé à l'ossature (3) à une première extrémité, tandis qu'un élément porteur (14, 27), dont la circonférence extérieure est reliée à une extrémité du rouleau tubulaire (1), est fixé à l'arbre de sortie (12), caractérisé en ce qu'un palier (10,21) est prévu entre la circonférence extérieure de l'extrémité du manchon (7) directement fixée à l'ossature (3) et la paroi intérieure du rouleau tubulaire (6), et en ce que l'autre extrémité du rouleau tubulaire (1) reliée à l'arbre de sortie (12) est supportée par un palier (15,15',22) qui est prévu entre le rouleau tubulaire (1) et un support (16,19,7) qui est directement fixé à l'ossature (3).

2. Convoyeur suivant la revendication 1, caractérisé en ce que l'élément porteur en forme de disque (14) comprend un moyeu (13) qui est solidaire dudit rouleau (1).

3. Convoyeur suivant la revendication 1, caractérisé en ce que l'élément porteur (27) s'étendant transversalement à l'arbre (12) est placé de sorte que ses extrémités sont dans des logements (28) prévus dans ledit rouleau (1).

4. Convoyeur suivant l'une quelconque des revendications précédentes, caractérisé en ce que l'arbre de sortie est entouré d'un support (16) fixé à l'ossature (3), et en ce qu'un palier (15) est prévu entre la circonférence extérieure dudit support (16) et la circonférence intérieure du rouleau (1).

5. Convoyeur suivant l'une quelconque des revendications 1 à 3, caractérisé en ce que l'arbre de sortie (12) est entouré par un support (19) fixé à l'ossature, et en ce qu'un palier (15') est prévu entre la circonférence extérieure d'un moyeu monté sur l'arbre de sortie (12) du moteur (11) et fixé au rouleau (1), et la circonférence intérieure du support (19).

6. Convoyeur suivant l'une quelconque des revendications 1 à 3, caractérisé en ce que, près de ses extrémités, le rouleau (1) est supporté, par l'intermédiaire de paliers (21,22), sur le manchon (7) placé à l'intérieur du rouleau (1).
